Europäisches Patentamt

European Patent Office

Office européen des brevets

(19)

(11) Publication number: **0 089 811**
**A2**

(12) **EUROPEAN PATENT APPLICATION**

(21) Application number: **83301480.6**

(22) Date of filing: **17.03.83**

(51) Int. Cl.³: **C 08 G 63/52**
**C 08 G 63/76, C 08 L 67/06**
**C 08 F 283/00, C 08 F 220/06**

(30) Priority: **19.03.82 GB 8208109**

(43) Date of publication of application:
**28.09.83 Bulletin 83/39**

(84) Designated Contracting States:
**BE DE FR GB IT NL SE**

(71) Applicant: **The British Petroleum Company p.l.c.**
**Britannic House Moor Lane**
**London EC2Y 9BU(GB)**

(72) Inventor: **Wilson, Douglas**
**British Petroleum Company p.l.c. Chertsey Road**
**Sunbury-on-Thames Middlesex, TW16 7LN(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) **Modified unsaturated polyester resins.**

(57) This invention relates to a composition containing an unsaturated polyester prepolymer, a copolymerisable vinyl monomer and an unsaturated monocarboxylic acid. The addition of an unsaturated monocarboxylic acid to the composition improves its adhesive properties, especially in metal to metal adhesion, significantly.

EP 0 089 811 A2

Croydon Printing Company Ltd

0089811

1

## MODIFIED UNSATURATED POLYESTER RESINS

The present invention relates to unsaturated polyester resins modified by addition of a copolymerisable monomer to improve the adhesive charateristics of the resin.

Unsaturated polyesters are typically made from mixtures of phthalic and maleic anhydride and propylene glycol to form initially a prepolymer. About 10% excess propylene glycol is usually employed to have the prepolymer terminated with hydroxyl groups. Usually about 35% of a vinyl monomer such as styrene or vinyl toluene is added to the polyester to reduce its viscosity and to prepare a copolymerisable composition. A small amount of inhibitor is generally added to prevent polymerisation during storage or transportation.

When ready for use a polymerisation catalyst is added. The inhibitor is destroyed by the catalyst and the so-called "pot life" of the prepolymer and vinyl monomer mix is dependent upon the choice of inhibitor and catalyst combination and temperature. Conventionally, if a relatively short pot life is desired, a low temperature catalyst promoter system such as methylethyl ketone peroxide and cobalt naphthenate is chosen.

Many modifications have been made to the basic system described above. For example, maleic anhydride has been replaced by fumaric acid, propylene glycol has been replaced by ethylene glycol and isophthalic acid has been used instead of phthalic anhydride. These modifications have enabled the physical characteristics of the polyester to be altered to meet the desired end result such as brittleness, stiffness, resistance to high temperature or moisture or the solubility of the prepolymer in the vinyl monomer used. Most

1

variations generate a polyester resin which upon curing has some adhesive characteristics.

It has now been found that by a suitable choice of vinyl monomers to be copolymerised with the prepolymer the adhesive characteristics of the polyester resin can be improved significantly.

Accordingly, the present invention is a composition comprising an unsaturated polyester prepolymer and a copolymerisable vinyl monomer selected from styrene, methyl methacrylate and vinyl toluene, characterised in that the composition contains an unsaturated monocarboxylic acid.

Any of the conventional unsaturated polyester prepolymers described above may be used in the compositions of the present invention. Such prepolymers are dissolved in the vinyl monomer which may be styrene or vinyl toluene.

The total amount of vinyl monomer and unsaturated monocarboxylic acid in said compositions is preferably between 15 and 50 parts by weight, more preferably between 30 and 45 parts by weight in the final composition.

The unsaturated monocarboxylic acid in the composition may be in addition to or may partially replace the vinyl monomer used. The monocarboxylic acid should preferably be compatible with the vinyl monomer. Specific examples of the unsaturated monocarboxylic acids include acrylic acid and homologues thereof such as eg methacrylic acid.

The ratio of the unsaturated monocarboxylic acid to the vinyl monomer in the composition is suitably between 0.05:1 and 2:1 by weight, preferably between 0.05:1 and 1:1 by weight and most preferably between 0.05:1 and 0.4:1.

The composition thus produced may contain the usual inhibitors eg hydroquinones or t-butyl catechol to facilitate storage.

In order to copolymerise the components in the composition conventional initiators such as methylethyl ketone peroxide may be used. In addition conventional accelerators such as the naphthenates of cobalt or manganese may be used.

The compositions of the present invention may be cured in the presence of the initiator and the accelerator either at room temperature or by moderate heating. The cured compositions form strong adhesive bonds and are particularly suitable for metal to metal adhesion and as a binder for glass fibres to be made into shapes by wet lay up without use of compression moulds.

The present invention is further illustrated with reference to the following Examples.

Examples 1-6

Compositions containing (meth)acrylic acid in addition to vinyl monomers

An unsaturated polyester resin based on maleic anhydride, phthalic anhydride and propylene glycol with a styrene monomer content of 41% was used. The resin was modified by addition of acrylic acid (AC) and methacrylic acid (METH) respectively at levels of up to 20% by weight. The mixing of AC and METH was achieved by stirring with a spatula for approximately one minute. The quantities of resin and monomers are shown in Table 1.

100g of resin was taken and to this the requisite quantity of the monomers styrene and AC/METH were added. The mixture was well stirred to ensure even mixing. 1g of cobalt naphthenate accelerator was then added and the mixture was well stirred. 2g of methylethyl ketone peroxide (MEKP) was added next and stirred into the composition.

The modified resins, were then used to glue together strips of stainless steel or strips of Perspex (Regd. Trade Mark). The stainless steel strips were of dimensions 50 x 10 x 1 mm and were assembled so as to give an overlap joint 100 $mm^2$ in area. The Perspex (Regd. Trade Mark) strips were of dimensions 50 x 10 x 3mm and were glued end-on giving a butt joint 30 $mm^2$ in area. The steel strips were cleaned with an abrasive pad soaked in acetone and the Perspex (Regd. Trade Mark) strips were wiped with acetone to ensure that clean surfaces were used for the tests. The strips were held together with small spring clips. After two hours at room temperature the samples were heated at 65°C for a minimum of sixteen hours.

The strength of the adhesive bonds was determined by testing to destruction on an Instron tensile testing machine, using a crosshead speed of 1mm per minute. Bond strengths were recorded in Newtons and an average value for five test samples was recorded for each formulation. The results are shown in Table 1.

A comparative test (A) not according to the invention was carried out using the unmodified resin without adding any AC or METH but retaining the original styrene comonomer. The test was carried out under the same conditions as in Examples 1-6 above. The results of this test are also shown in Table 1.

TABLE 1

| Example | Resin (g) | AC (g) | METH (g) | Stainless steel bond strength (N) | Perspex bond strength (N) |
|---------|-----------|--------|----------|-----------------------------------|---------------------------|
| A | 100 | – | – | 264 ± 91 | 675 |
| 1 | 100 | 5 | – | 954 ± 104 | 685 |
| 2 | 100 | 10 | – | 1160 ± 104 | 549 |
| 3 | 100 | 20 | | 1590 ± 203 | 850 |
| 4 | 100 | – | 5 | 1118 ± 483 | .– |
| 5 | 100 | – | 10 | 875 ± 339 | – |
| 6 | 100 | – | 20 | 961 ± 169 | – |

A – Comparative Test not according to the invention.

Examples 7 – 9

A roofing grade unsaturated polyester resin based on maleic anhydride, phthalic anhydride and propylene glycol with combined styrene and methylmethacrylate (ratio 4:1) monomer content of 35% w/w. The resin was modified by addition of acrylic acid (AC) at levels of up to 20% by weight.

The preparations of the modified polyesters and the preparing and testing of adhesion samples was carried out as described in Examples 1-6 above.

The quantities of resin and monomer mixture employed and the resulting bond strengths to stainless steel and Perspex (Regd. Trade Mark) were measured as in Examples 1-6 above. The results are shown in Table 2.

A comparative test (B) was performed using the unmodified resin as previously. The results of this test are also shown in Table 2.

TABLE 2

| Example | Resin (g) | AC (g) | Stainless steel bond strength (N) | Perspex bond strength (N) |
|---|---|---|---|---|
| B | 100 | - | 314 | 480 |
| 7 | 100 | 5 | 1619 ± 191 | 581 |
| 8 | 100 | 10 | 1553 ± 114 | 758 |
| 9 | 100 | 20 | ·2264 ± 167 | 1128 |

B- Comparative Test not according to the invention.

Examples 10-17

Partial replacement of vinyl monomers with (meth)acrylic acids

The polyester resin used was prepared from maleic anhydride, adipic acid and diethylene glycol. The unmodified resin had a styrene content of 35% by weight. The styrene monomer was replaced with the specified amounts of acrylic acid (AC) and methacrylic acid (METH) during manufacture, so as to maintain a constant total monomer content of 35% w/w.

These modified resins were then used to prepare stainless steel lap joint samples as described in Examples 1-6. The bond strengths obtained are shown in Table 3.

In a comparative test (C), not according to the invention the unmodified resin from Examples 10-17 was tested for bond strength as previously. The results are shown in Table 3.

TABLE 3

| Example | Styrene % | AC % | METH % | Stainless steel bond strength (N) |
|---|---|---|---|---|
| C | 35 | - | - | 774 ± 178 |
| 10 | 30 | 5 | - | 1421 ± 286 |
| 11 | 25 | 10 | - | 1594 ± 143 |
| 12 | 20 | 15 | - | 1686 ± 176 |
| 13 | 15 | 20 | - | 1824 ± 300 |
| 14 | 30 | - | 5 | 1224 ± 188 |
| 15 | 25 | - | 10 | 1796 ± 355 |
| 16 | 20 | - | 15 | 1856 ± 395 |
| 17 | 15 | - | 20 | 2094 ± 281 |

C - Comparative Test not according to the invention

Examples 18 and 19

That improved adhesion to mild steel can also be achieved by this method of modification was demonstrated by measuring the elongation of a resin coating attached to a mild steel plate according to ASTM D522-60. The resin used for the coating was the same as that described in Examples 10-17 above. Coatings approximately 300 microns inthickness were applied to mild steel plates, degreased with acetone. The coatings were cured at room temperature for two hours and then hardened in an oven at 65°C for a minimum of 16 hours. Table 4 shows the results obtained for the unmodified resin (Comparative Test D) and two modified resins. In the Test D (not according to the invention) the coating cracked and became separated from the metal substrate along the entire length of the sample, whereas for the modified resin coatings of Examples 18 and 19 no cracking or separation from the substrate was observed.

TABLE 4

Results of elongation test according to ASTM D522-60

| Example | Styrene % | AC % | METH % | % Elongation |
|---------|-----------|------|--------|--------------|
| D | 35 | - | - | 6 |
| 18 | 25 | 10 | - | 40 |
| 19 | 25 | - | 10 | 40 |

D - Comparative Test not according to the invention

Thus it can be seen that inclusion of the unsaturated monocarboxylic acids, (AC), methacrylic acid (METH) at levels of up to 20%, improves the adhesion of polyester resins to stainless steel by up to 500% and to Perspex (Regd. Trade Mark) by up to 100%.

Claims:

1. A composition comprising an unsaturated polyester prepolymer and a copolymerisable vinyl monomer selected from styrene, methyl methacrylate and vinyl toluene, characterised in that the composition contains an unsaturated monocarboxylic acid.

2. A composition according to claim 1 wherein the prepolymer is dissolved in the vinyl monomer.

3. A composition according to claim 1 or 2 wherein the amount of vinyl monomer in said compositions is between 15 and 50 parts by weight in the final composition.

4. A composition according to any one of the preceding claims wherein the unsaturated monocarboxylic acid is acrylic acid or methacrylic acid.

5. A composition according to any one of the preceding claims wherein the ratio of the unsaturated monocarboxylic acid to the vinyl monomer in the composition is between 0.05:1 and 2:1 by weight.

6. A composition according to any one of the preceding claims wherein the composition contains in addition hydroquinones or t-butyl catechol as inhibitors.